# EUROPEAN PATENT APPLICATION

(11) **EP 4 230 858 A1**
(43) Date of publication of application: **23.08.2023**
(21) Application number: 22275016.8
(22) Date of filing: 18.02.2022
(51) Int. Cl.: F02K 1/00, F02K 1/28, F02K 9/82

(54) **EXHAUST NOZZLE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to an exhaust nozzle for fluidic-thrust vectoring, comprising an elongate channel for directing exhaust gasses having first and second ends. The elongate channel has an inlet at the first end comprising a continuous curved cross-sectional shape and an exit at the second end having a polygonal cross-sectional shape. In a preferred embodiment, the exhaust nozzle has a rectangular cross-sectional exit. A jet engine and an aircraft having the exhaust nozzle are also provided.

## Description

### FIELD

The present invention relates to an exhaust nozzle for channelling thrust generated by a jet engine or rocket. Particularly, but not exclusively, the present invention relates to an exhaust nozzle for use on a jet engine or an aircraft.

### BACKGROUND

A nozzle is the rearmost portion of an exhaust pipe (i.e. duct), by which thrust from an engine is directed.

Fluidic thrust vectoring using two-dimensional (2D) nozzles (i.e. slits) is now well known. Three-dimensional (3D) nozzles are also generally known, but it has been challenging to make them work with fluidic thrust vectoring. Various exhaust pipe geometric parameters, such as nozzle shape and bypass duct diameter, have been explored in the past. Rectangular nozzles, such as those found on the Lockheed Martin F-22 Raptor, are preferable. Circular nozzles are also known as axisymmetric nozzles.

Thrust vectoring is the ability of a vehicle such as an aircraft or rocket to manipulate the direction of the exhaust flow from its engine(s) or motor(s) to control the attitude or angular velocity of the vehicle. Thrust vectoring flight control is obtained through deflection of the thrust generated by the vehicle's engines in the pitch and/or yaw directions. This may be achieved by mechanical means, such as pivoting the nozzle by way of a hinge. Fluidic thrust vectoring is the manipulation or control of the exhaust flow with the use of a secondary air source, typically bleed air from the engine compressor or fan.

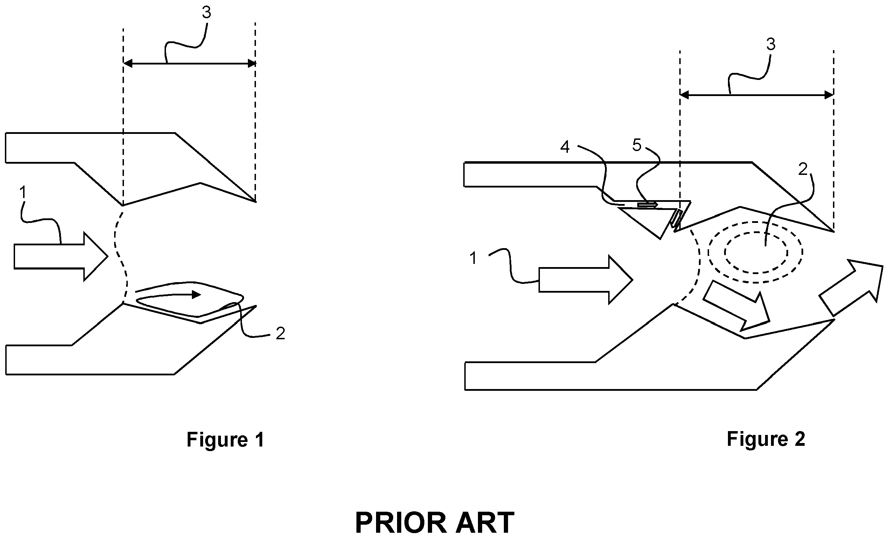

The Dual Throat Nozzle (DTN) concept was developed by the NASA Langley Research Centre in 2003 based on the throat shifting method. This is shown in Figure 1. A recessed cavity section 3 is located between upstream (conventional nozzle throat) and downstream minimum areas (an exit throat). Fluidic injection 1 is introduced at the upstream minimum area location. This concept combines the thrust efficiency of the throat skewing thrust vectoring method with increased thrust-vectoring efficiencies obtained by maximizing pressure differentials in the separated cavity flow 2 located downstream of the first nozzle throat.

The thrust vectoring efficiency of the DTN has been shown to be greater than that of the Shock Vector Control (SVC) and throat shifting methods and has been the subject of numerous research studies conducted by NASA. These studies have covered a wide range of nozzle design and operating conditions. Configurations range between those having rectangular and circular cross sections, and where the nozzles are operated in single axis and dual axis modes.

Further design enhancements to the DTN nozzle concept to enable use on supersonic aircraft include varying the nozzle area, and adopting a 'bypass DTN' approach where throat bypass is injected into the cavity between the two throats. The latter bypass approach is shown in Figure 2. Modifications to the divergence and convergence angles of the cavity 3 combined with curvature of the walls resulted in significant increases in achievable thrust vector angle and thrust vectoring efficiency.

The bypass DTN uses exhaust gasses from upstream of the throat convergence for secondary injection 5 rather than independent bleed air from the engine compressor. Bypass ducts 4 containing control valves are used to controllably feed exhaust gasses 1 from the primary nozzle upstream of the throat contraction into the injection nozzles at the throat.

The elimination of oblique shocks prevents the flow from turning prematurely and allows greater vectoring to occur in the subsonic flow region downstream of the normal shock.

This approach of using primary nozzle bypass 4 avoids the complexity and expense of providing dedicated compressor bleed offtakes and transfer ducts and eliminates the impact of bleed offtake on engine performance and stability.

The known prior art exhaust ducts have provided either: 1) axisymmetric nozzles, where the entire exhaust duct has axisymmetric (circular) cross-sections along its length (from turbine exit, through the throat to the nozzle exit); or 2) rectangular nozzles, where the entire exhaust duct has rectangular/square cross-section along its length (from turbine exit, through the throat to the nozzle exit).

The present inventors have designed a 3D exhaust nozzle shape that allows combined and nearly monotonic pitch and yaw vectoring of the exhaust jet through a rectangular nozzle exit. This avoids the tendency of jet to vector only in the two orthogonal directions defined by the nozzle exit shape. This problem is not solved by the known prior art designs.

### SUMMARY

According to a first aspect of the present invention, there is provided an exhaust nozzle for fluidic-thrust vectoring, comprising:
an elongate channel for directing exhaust gasses having a first end and a second end, the elongate channel having an inlet at the first end comprising a continuous curved cross-sectional shape and an exit at the second end having a polygonal cross-sectional shape.

Advantageously, the present invention provides a three-dimensional exhaust nozzle that transitions directly from the shape of the turbine outlet to a shape that provides a number of advantages to fluidic thrust vectoring. While rectangular exits are known, they are not provided in three-dimensional nozzles and it is not known to transition from a circular cross-sectional shape to a polygonal cross-sectional shape in the same nozzle; therefore, complexity tends to be reduced.

The exhaust nozzle may comprise:
an expansion region having the inlet, wherein in the expansion region the cross-sectional area of the exhaust nozzle increases with distance from the inlet towards a contraction region; and
a contraction region having the exit, coupled to the expansion region at the end of the expansion region opposite the inlet, wherein the cross-sectional area of the exhaust nozzle decreases with distance from the contraction region towards the exit, wherein the expansion region and contraction region together define the channel.

The contraction region may form between 15% and 40% of the length of the exhaust nozzle. Preferably, the contraction region forms between 20% and 30% of the length of the exhaust nozzle. Even more preferably, the contraction region forms about 25% of the length of the exhaust nozzle.

The inlet may have a circular cross-sectional shape. Alternatively, the inlet may have an elliptical cross-sectional shape.

The exit may have a rectangular cross-sectional shape. Alternatively, the exit may have a square cross-sectional shape. Alternatively, the exit may have a triangular cross-sectional shape.

The channel may not comprise any corners. In other words, the channel may comprise surfaces that meet at an angle of between 120 degrees and 180 degrees. Preferably, the channel may comprise surfaces that meet at an angle of between 140 degrees and 180 degrees.

The contraction region may comprise a plurality of joined tessellated panels to change the cross-sectional shape of the channel from a continuous curve to an intermediate cross-sectional shape before the exit cross-sectional shape is formed. Each panel may be triangular and arranged such that adjacent panels are inverted relative to each other so as to form a uniform exit plane.

The cross-sectional shape of the nozzle may transition from a continuous curve to the exit cross-sectional shape between the second end and 20% of the length of the exhaust nozzle when measured from the second end. Alternatively, the cross-sectional shape of the nozzle may transition from a continuous curve to the exit cross-sectional shape between the second end and 15% of the length of the exhaust nozzle when measured from the second end. Alternatively, the cross-sectional shape of the nozzle may transition from a continuous curve to the exit cross-sectional shape between the second end and 10% of the length of the exhaust nozzle when measured from the second end. Alternatively, the cross-sectional shape of the nozzle may transition from a continuous curve to the exit cross-sectional shape between the second end and 5% of the length of the exhaust nozzle when measured from the second end.

According to a second aspect of the present invention, there is provided a jet engine comprising the exhaust nozzle according to the first aspect.

According to a third aspect of the present invention, there is provided aircraft comprising the exhaust nozzle according to the first aspect.

### BRIEF DESCRIPTION OF THE FIGURES

Embodiments of the invention will now be described by way of example only with reference to the figures, in which:
Figure 1 shows a schematic view of a DTN according to the prior art;
Figure 2 shows a schematic view of modified DTN according to the prior art;
Figure 3a shows a lateral cross-sectional view through a nozzle according to an embodiment;
Figure 3b shows a longitudinal cross-sectional view through a nozzle according to an embodiment, along line AA in Figure 3a;

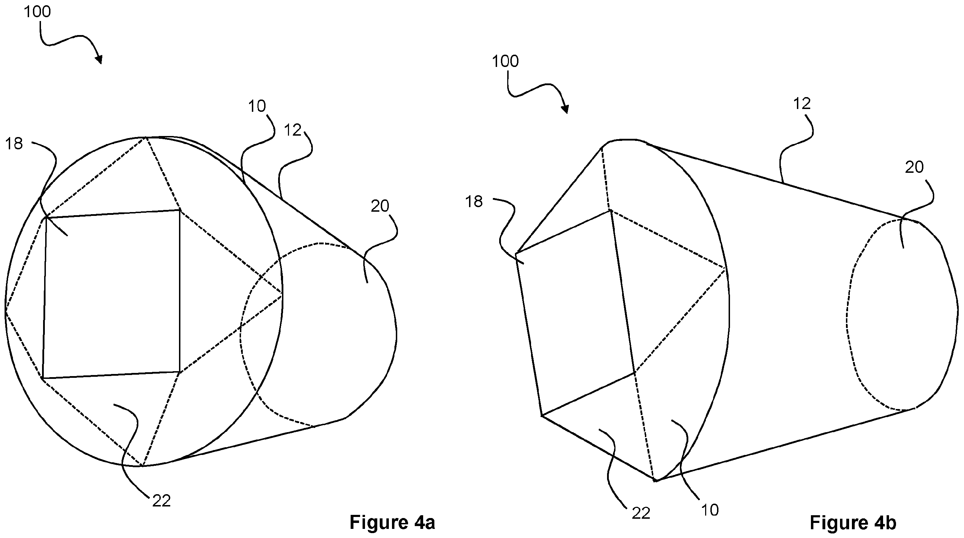

Figures 4a and 4b show perspective views of a nozzle according to an embodiment, looking from the outlet towards the inlet;
Figure 5a shows a perspective view of an end of a nozzle according to an embodiment; and
Figure 5b shows a perspective view of the end of the nozzle of Figure 5a, from the inside looking rearwards (nearside surfaces removed).

### DETAILED DESCRIPTION

Generally, embodiments relate to an exhaust nozzle which transitions from a circular or elliptical cross-section at its inlet (throat) to an exit (outlet) having a rectangular cross-section. Outlets having rectangular cross-sections are beneficial, while turbines and consequently their exits are necessarily circular. Therefore, the described embodiments provide the most optimum way to transition the cross-section of an exhaust nozzle from circular to rectangular to maximise overall propulsive efficiency together with vectoring efficiency and effectiveness (particularly if there is a need to achieve combined 2-axis vectoring for pitch and yaw control).

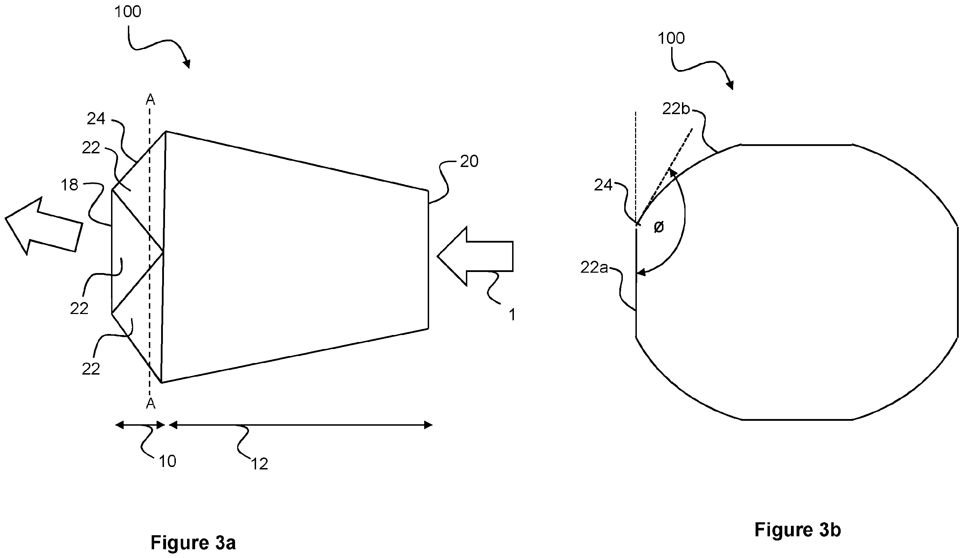

Figures 3a and 3b show cross-sectional views through an exhaust nozzle 100 according to an embodiment. The exhaust nozzle 100 defines a cavity. The exhaust nozzle 100 comprises an expansion region 12 and a contraction region 10. The expansion region 12 comprises a throat 20 for receiving exhaust gasses from a turbine exit. The throat 20 is the region where the compressed gas injection used for vectoring control in introduced to the exhaust nozzle 100. The throat 20 has a circular cross-section, to match that of the turbine exit. In other embodiments, the throat 20 has an elliptical cross-section to match the turbine exit. The throat 20 is where the exhaust nozzle 100 reaches its first minimum cross-sectional area downstream of the turbine exit.

The cross-section of the expansion region 12 increases in area between the throat 20 and the point at which it meets the contraction region 10. In the case where the aspect ratio of the nozzle exit 18 is not 1:1 (i.e. is not a square), the internal cross-section of the expansion region 12 transitions from circular at the throat 20 to elliptical at the point it meets the contraction region 10. In other words, the internal walls of the expansion section 12 are smooth and curved, maintaining a continuity of curvature.

The contraction region 10 is provided with an exit 18, through which exhaust gases escape the nozzle 100 to mix with the atmosphere. The exit 18 is an aperture (or orifice) in the outside surface of the nozzle 100, providing access to the cavity within the nozzle 100 for channelling exhaust gases. The exit 18 has a rectangular cross-section. In alternative embodiments, the exit 18 has a square, triangular, pentagonal or hexagonal cross-section. Generally, the exit 18 has a non-circular cross-section.

The contraction region 10 transitions from its largest axial cross-sectional area (i.e. diameter) at the point it meets the expansion region 12, to its smallest axial cross-sectional area (i.e. diameter) at the exit 18.

The contraction region 10 typically occupies between 15% and 25% of the length of the nozzle 100 (i.e. between the throat 20 and the exit 18).

The transition from the circular cross-section to the rectangular nozzle exit 18 is best accomplished during the final short contraction region 10 of the nozzle 100. The final transition from elliptic to rectangular cross-section is best achieved using a mathematical surface geometry approach that avoids the formation of a strong corner until the exit 18 plane is reached. The exit 18 plane is an artificial planar surface that touches all parts of the nozzle forming the lip of the exit 18. If corners (i.e. internal panels intersecting with an angle of less than 120 degrees) form too far ahead of the exit 18 plane, the ability to achieve uniform and monotonically varying dual axis (combined pitch and yaw) vectoring of the exhaust jet is compromised.

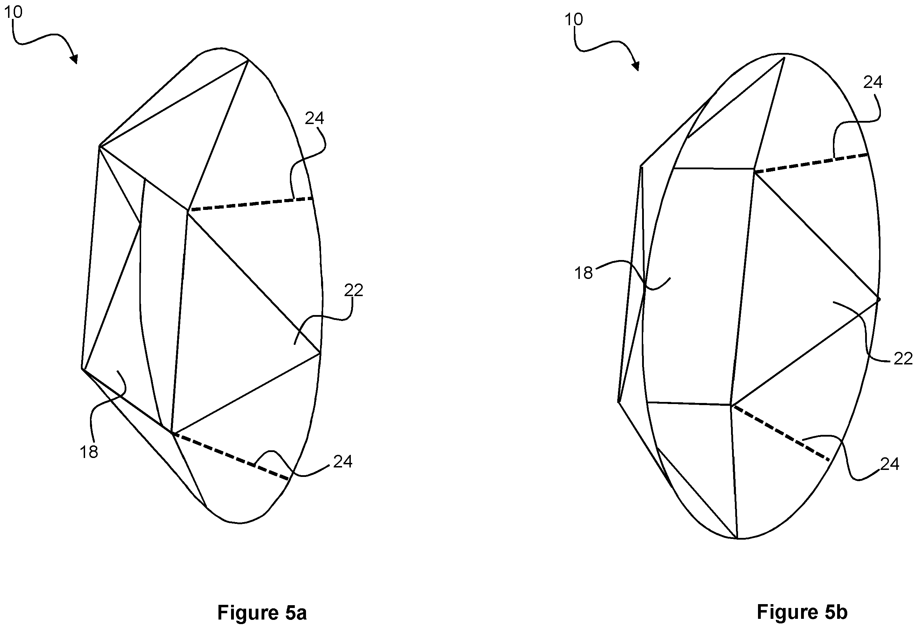

The introduction of sharp corners within the nozzle 100 tends to bias the vectoring to 'snap' towards either of the orthogonal directions of the exit 18. In other words, the internal geometry of the contraction region 10 is designed such that corners are not formed along vertices 24 leading to the exit 18. Here, corners are defined as vertices of panels meeting at angles of less than 110 degrees, preferably less than 110 degrees, more preferably less than 120 degrees and even more preferably less than 130 degrees. In other words, most preferably panels 22 are arranged or designed such that they meet at an angle of 130 degrees or more in the contraction region 10. These vertices 24 are illustrated more clearly in Figures 3b, 5a and 5b. Figures 5a and 5b illustrate different perspective views of the contraction region 10 as described above.

Figure 3b is a cross-section through line A-A in Figure 3a. Figure 3b shows that while one panel 22a forming the internal surface of the contraction region 10 is planar, an adjoining panel (22b) may be curved. This enables the gradual transition from a throat 20 having a cross-section with continuity of curvature, to an exit 18 having entirely linear sides. Closer to the exit 18, panels are 22 are made more linear until the cross-sectional shape of the nozzle entirely transforms into that of the exit 18. The panels 22 are arranged top optimise transition from curved to linear cross-section, while ensuring corners (i.e. angles less than 120 degrees) are not formed between the panels 22.

One solution to this problem, i.e. avoiding corner formation, is using triangular panels 22 to form the internal surface of the contraction region 10. Other more complex mathematical surface generations could achieve even better performing transitional surfaces. For example, panels 22 may not be entirely planar or curved, but a combination thereof. Panels 22 may be irregularly shaped, while progressing from a wide base to a narrow tip. The panels 22 tessellate with each other.

The transition from smoothly curved cross-sections (e.g. circle or ellipse) to the rectangular duct exit 18 occurs during the final nozzle 100 contraction. Preferably, the final transition takes place in the final 5%-15% of the nozzle 100 length as measured from the throat 20 to the exit 18 plane. In other words, while the nozzle 100 cross-sectional area reduces throughout the whole contraction region 10, in the final 5%-15% of the nozzle 100 length, the cross-sectional shape changes gradually to that of the exit 18. The function of this final contraction is to change the shape of the internal nozzle structure, control the exit area and provide the final turning of the jet to achieve vectoring.

Experimental data shows the above approach tends to make thrust vectoring angles of up to around 15 degrees in the 45 degree combined pitch/yaw plane possible. Nozzles 100 where the transition surface was generated with a corner funnelling directly (i.e. edges along the vertices 24) into the corner of the exit 18 could only achieve 2-4 degrees of vectoring in the 45 degree combined pitch/yaw plane, with the exhaust jet having a tendency to flip into either the pitch or yaw plane when actuated in a way to achieve a combined pitch/yaw vector angle.

This approach is applicable to all fluidic thrust vectoring schemes that employ fluidic injection at the nozzle throat 20 to achieve vectoring of a jet that exhausts via a rectangular (or possibly any non-elliptical) exit 18. For example, the nozzle 100 described herein above is applicable to DTN and bypass-DTN exhaust ducts.

The exhaust nozzle 100 may be attached to the rear of an aircraft to direct thrust from a jet engine or rocket motor. Here, a jet engine could be a ramjet, scramjet, turboprop, turbofan, turbojet or turboshaft engine. The exhaust nozzle 100 is further applicable to waterjets. Therefore, instead of an aircraft, the exhaust nozzle 100 could be applied to a watercraft or spacecraft.

## Claims

1. An exhaust nozzle for fluidic-thrust vectoring, comprising:
an elongate channel for directing exhaust gasses having a first end and a second end, the elongate channel having an inlet at the first end comprising a continuous curved cross-sectional shape and an exit at the second end having a polygonal cross-sectional shape.

2. The exhaust nozzle according to claim 1, comprising:
an expansion region having the inlet, wherein in the expansion region the cross-sectional area of the exhaust nozzle increases with distance from the inlet towards a contraction region; and
a contraction region having the exit, coupled to the expansion region at the end of the expansion region opposite the inlet, wherein the cross-sectional area of the exhaust nozzle decreases with distance from the contraction region towards the exit,
wherein the expansion region and contraction region together define the channel.

3. The exhaust nozzle according to claim 2, wherein the contraction region forms between 15% and 40% of the length of the exhaust nozzle.

4. The exhaust nozzle according to any one of the preceding claims, wherein the inlet has a circular cross-section.

5. The exhaust nozzle according to any one of the preceding claims, wherein the exit has a rectangular cross-section.

6. The exhaust nozzle according to any one of the preceding claims, wherein the channel comprises surfaces that meet at an angle of between 120 degrees and 180 degrees.

7. The exhaust nozzle according to any one of the preceding claims, wherein the contraction region comprises a plurality of joined tessellated panels to change the cross-sectional shape of the channel from a continuous curve to an intermediate cross-sectional shape before the exit cross-sectional shape is formed.

8. The exhaust nozzle according to claim 7, wherein each panel is triangular and arranged such that adjacent panels are inverted relative to each other so as to form a uniform exit plane.

9. The exhaust nozzle according to any one of the preceding claims, wherein the cross-sectional shape of the nozzle transitions from a continuous curve to the exit cross-sectional shape between the second end and 20% of the length of the exhaust nozzle when measured from the second end.

10. A jet engine comprising the exhaust nozzle according to any one of the preceding claims.

11. An aircraft comprising the exhaust nozzle according to any one of claims 1 to 9.
